# EUROPEAN PATENT APPLICATION

(11) **EP 3 975 291 A1**
(43) Date of publication of application: **30.03.2022**
(21) Application number: 20913168.9
(22) Date of filing: 30.11.2020
(51) Int. Cl.: H01M 4/36, H01M 4/505, H01M 4/525, H01M 4/62

(54) **COBALT-FREE LAYERED POSITIVE ELECTRODE MATERIAL, PREPARATION METHOD THEREFOR, AND LITHIUM ION BATTERY**

(30) Priority: 17.01.2020 CN 202010055698
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN)
(74) Representative: Tiburzi, Andrea
(86) International application number: PCT/CN2020/132907
(87) International publication number: WO 2021/143375

(57) **Abstract**

The present disclosure provides a cobalt-free lamellar cathode material of a lithium ion battery, a method for preparing the cobalt-free lamellar cathode material, and a lithium ion battery. The cobalt-free lamellar cathode material comprises lamellar nickel lithium manganate of monocrystal morphology and zinc oxide coated onto a surface of the nickel lithium manganate, wherein a general formula of the nickel lithium manganate is LiNiₓMn₁₋ₓO₂, and 0.55≤x≤0.95. Therefore, manganese ions in nickel lithium manganate can be effectively prevented from being dissolved by an electrolyte of the lithium ion battery by coating the surface of the lamellar nickel lithium manganate of monocrystal morphology with zinc oxide, such that the specific capacity, the first time charge efficiency (first efficiency for short) and the cycle performance of the lithium ion battery can be further effectively improved. Moreover, the content of residual alkali (lithium hydroxide or lithium carbonate) of the cobalt-free lamellar cathode material is relatively low.

## Description

### Technical Field

The disclosure belongs to the technical field of lithium ion batteries, in particular to a cobalt-free lamellar cathode material of a lithium ion battery, a method for preparing the cobalt-free lamellar cathode material, and the lithium ion battery.

### Background

With rapid development of lithium ion power batteries, higher requests on cost, safety, cycle life of the lithium ion power batteries are put forward. The performance of a cathode material as a key composition of the lithium ion battery plays a critical role on performance of the whole battery. Compared with a ternary cathode material, the cobalt-free cathode material has the advantages of low cost, stable structure and the like. As the cobalt-free cathode material is free of cobalt and contains a lot of element Mn, the cobalt-free cathode material has the problem that an excess of metal Mn ions is dissolved.

Thus, it is remained to further investigate the cobalt-free cathode material.

### Summary

The present disclosure aims to at least solve one of the technical problems in the related art to a certain extent. Thus, it is thereof an objective of the present disclosure to provide a cobalt-free lamellar cathode material for a lithium ion battery. Manganese ions in the cobalt-free lamellar cathode material are not easily dissolved by an electrolyte.

In one aspect of the present disclosure, the present disclosure provides a cobalt-free lamellar cathode material for a lithium ion battery. According to the embodiments of the present disclosure, the cobalt-free lamellar cathode material includes lamellar nickel lithium manganate of monocrystal morphology and zinc oxide coated onto a surface of the nickel lithium manganate, wherein a general formula of the nickel lithium manganate is LiNiₓMn₁₋ₓO₂, and 0.55≤x≤0.95. Therefore, by coating the surface of the lamellar nickel lithium manganate of monocrystal morphology with zinc oxide, manganese ions in nickel lithium manganate can be effectively prevented from being dissolved by an electrolyte of the lithium ion battery. Such that the specific capacity, the first time charge efficiency (first efficiency for short) and the cycle performance of the lithium ion battery can be further effectively improved. Moreover, the content of residual alkali (lithium hydroxide or lithium carbonate) of the cobalt-free lamellar cathode material is lower.

According to the embodiments of the present disclosure, a mass percent of zinc oxide is 0.05-0.3% based on the total mass of the cobalt-free lamellar cathode material.

According to the embodiments of the present disclosure, a particle size of the nickel lithium manganate is 1-5 microns.

According to the embodiments of the present disclosure, the specific surface area of the cobalt-free lamellar cathode material is 0.1-0.8 m²/g.

In another aspect of the present disclosure, the present disclosure provides a method for preparing the cobalt-free lamellar cathode material. According to the embodiments of the present disclosure, the method for preparing the cobalt-free lamellar cathode material includes: mixing the lamellar nickel lithium manganate of monocrystal morphology with a zinc salt solution to obtain a mixed solution; evaporating the mixed solution to dryness to obtain a pre-mixture; and conducting a reaction on the pre-mixture at a predetermined temperature for a predetermined time to obtain the cobalt-free lamellar cathode material. Therefore, according to the method, manganese ions in nickel lithium manganate can be effectively prevented from being dissolved by an electrolyte of the lithium ion battery by coating the surface of the lamellar nickel lithium manganate of monocrystal morphology with zinc oxide. Such that the specific capacity, the first time charge efficiency (first efficiency for short) and the cycle performance of the lithium ion battery can be further effectively improved. Moreover, the content of residual alkali (lithium hydroxide or lithium carbonate) of the prepared cobalt-free lamellar cathode material is lower. In addition, the method is simple and easy to operate, convenient for industrial production and low in production cost.

According to the embodiments of the present disclosure, the zinc salt is selected from at least one of zinc acetate, zinc sulfate and zinc nitrate.

According to the embodiments of the present disclosure, a concentration of the zinc salt is 0.5-2 mol/L.

According to the embodiments of the present disclosure, the predetermined temperature ranges from 400°C to 700°C and the predetermined time ranges from 5 hours to 10 hours.

According to the embodiments of the present disclosure, the reaction is conducted on the pre-mixture in an oxygen-containing environment, wherein a concentration of oxygen is 20-100%.

In yet another aspect of the present disclosure, the present disclosure provides a lithium ion battery. According to the embodiments of the present disclosure, the lithium ion battery includes the cobalt-free lamellar cathode material. Thus, the lithium ion battery has higher specific capacity and first effect and excellent cycle performance.

### Brief Description of the Drawings

Drawings of the description constituting a portion of the present application are used to provide a further understanding to the prevent disclosure; and schematic examples and its specification of the prevent disclosure are intended for explaining the prevent disclosure, and should not be construed to unduly limit this disclosure. In the drawings:
Fig. 1 is a structural schematic diagram of the cobalt-free lamellar cathode material in one embodiment of the present disclosure.
Fig. 2 is a flow schematic diagram of the method for preparing the cobalt-free lamellar cathode material in another embodiment of the present disclosure.
Fig. 3 is a scanning electron microscope picture of the lamellar nickel lithium manganate of monocrystal morphology prepared in the embodiment 1.
Fig. 4 is a scanning electron microscope picture of the cobalt-free lamellar cathode material prepared in the embodiment 1.
Fig. 5 is an EDS diagram of the lamellar nickel lithium manganate of monocrystal morphology prepared in the embodiment 1.
Fig. 6 is a scanning EDS diagram of the cobalt-free lamellar cathode material in the embodiment 1.
Fig. 7 is a first cycle charge-discharge curve chart of the lithium ion battery A and the lithium ion battery B in the embodiment 1.
Fig. 8 is a cycle performance test diagram of the lithium ion battery A and the lithium ion battery B in the embodiment 1.
Fig. 9 is a content comparison diagram of manganese ions in the electrolyte of the lithium ion battery A and the lithium ion battery B in the embodiment 1 after 50 cycles at different temperatures.

### Detailed Description of the Embodiments

Detail description on the embodiments of the present disclosure will be made below. The embodiments described below are exemplary, and are merely used for explaining the present disclosure and are not construed as limitation to the present disclosure. The embodiments without specific technologies or conditions indicated are carried out according to technologies or conditions described by literature in the field or description of a product. The used reagents or instruments not indicated by manufacturers are conventional products which can be purchased in the market.

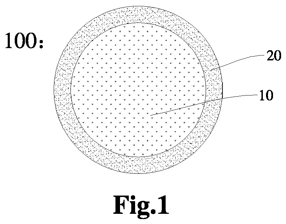

In one aspect of the present disclosure, the present disclosure provides a cobalt-free lamellar cathode material for a lithium ion battery. According to the embodiments of the present disclosure, referring to Fig. 1, the cobalt-free lamellar cathode material 100 includes lamellar nickel lithium manganate 10 of monocrystal morphology and zinc oxide 20 coated onto a surface of the nickel lithium manganate, wherein a general formula of the nickel lithium manganate 10 is LiNiₓMn₁₋ₓO₂, and 0.55≤x≤0.95. Therefore, by coating the surface of the lamellar nickel lithium manganate of monocrystal morphology with zinc oxide, manganese ions in nickel lithium manganate can be effectively prevented from being dissolved by an electrolyte of the lithium ion battery. Such that the specific capacity, the first time charge efficiency (first efficiency for short) and the cycle performance of the lithium ion battery can be further effectively improved. Moreover, the content of residual alkali (lithium hydroxide or lithium carbonate) of the cobalt-free lamellar cathode material is lower (in some embodiments, the content of the residual alkali is lower than 0.4%).

According to the embodiments of the present disclosure, a mass percent of zinc oxide is 0.05-0.3%, for example, 0.05%, 0.08%, 0.1%, 0.12%, 0.15%, 0.18%, 0.2%, 0.23%, 0.25%, 0.28% and 0.3% based on the total mass of the cobalt-free lamellar cathode material. Thus, the zinc oxide of the content can coat the cobalt-free lamellar cathode material uniformly better, such that manganese ions in the nickel lithium manganate can be better prevented from being dissolved by the electrolyte. If the content of zinc oxide is lower than 0.05%, the nickel lithium manganate may be coated incompletely and non-uniformly, which still leads to a relatively high content of the manganese ions dissolved by the electrolyte; if the content of zinc oxide is higher than 0.3%, as zinc oxide is made from an inactive material, the content of zinc oxide in the cobalt-free lamellar cathode material is large, which leads to relative large impedance of the integral lamellar cathode material and relatively reduced specific capacity.

According to the embodiments of the present disclosure, a particle size of the nickel lithium manganate is 1-5 microns, for example, 1 micron, 2 microns, 3 microns, 4 microns and 5 microns. Thus, the cobalt-free lamellar cathode material is large in specific capacity and small in specific surface area, which can further prevent side reactions of the electrolyte and nickel lithium manganate, thereby preventing manganese ions from being dissolved. If the particle size of nickel lithium manganate is smaller than 1 micron, the specific surface area of nickel lithium manganate is relatively large, such that the probability of side reactions of the electrolyte and nickel lithium manganate is increased. If the particle size of nickel lithium manganate is greater than 5 microns, the specific capacity and the rate capability of the cobalt-free lamellar cathode material are reduced relatively.

According to the embodiments of the present disclosure, the specific surface area of the cobalt-free lamellar cathode material is 0.1-0.8 m²/g, for example, 0.1 m²/g, 0.2 m²/g, 0.3 m²/g, 0.4 m²/g, 0.5 m²/g, 0.6 m2/g, 0.7 m²/g and 0.8 m²/g. Thus, the specific surface area with proper size not only can effectively guarantee good activity of the cobalt-free lamellar cathode material, but also can prevent side reactions of the electrolyte and the cobalt-free lamellar cathode material effectively. If the specific surface area is smaller than 0.1 m²/g, the activity of the cobalt-free lamellar cathode material is relatively small, such that the charge and discharge performance of the lithium ion battery is further affected. If the specific surface area of the cobalt-free lamellar cathode material is larger than 0.8 m²/g, the risk that the cobalt-free lamellar cathode material is reacted with the electrolyte is large, such that the electric property of the lithium ion battery is further affected.

As a preferred embodiment, the nickel lithium manganate is LiNi_{0.75}Mn_{0.25}O₂. The cobalt-free lamellar cathode material formed by coating the surface of the nickel lithium manganate of monocrystal morphology with zinc oxide has higher specific capacity, first time charge and discharge efficiency and better cycle performance.

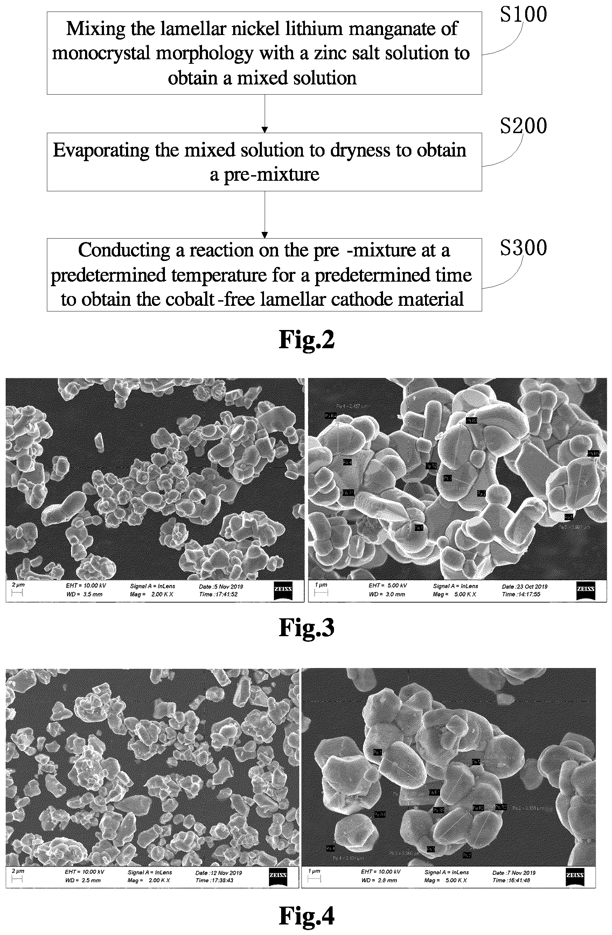

In another aspect of the present disclosure, the present disclosure provides a method for preparing the cobalt-free lamellar cathode material. According to the embodiments of the present disclosure, referring to Fig. 2, the method for preparing the cobalt-free cathode material includes:
S100: mixing the lamellar nickel lithium manganate of monocrystal morphology with a zinc salt solution to obtain a mixed solution.

According to the embodiments of the present disclosure, the lamellar nickel lithium manganate of monocrystal morphology is prepared by the following steps: LiOH and a precursor NiₓMn₁₋ₓ(OH)₂ (0.50≤x ≤0.95) are mixed by adopting a high speed mixing apparatus, wherein the mixing time is 5-15 min and the rotating speed is 800-900 rpm; a reaction is carried out on the mixed materials in an oxygen atmosphere (the concentration is greater than or equal to 90%), wherein the reaction temperature is 800-970°C (the heating rate is 1-5 °C/min), the reaction time is 10-20 hours, and after reaction, natural cooling is conducted to obtain the lamellar nickel lithium manganate of monocrystal morphology.

In order to make the nickel lithium manganate and the zinc salt to react uniformly, the nickel lithium manganate prepared by the method can be further crushed by a crushing apparatus to obtain powdery nickel lithium manganate, and then the powdery nickel lithium manganate is screened by a 300-400-mesh screen to obtain the nickel lithium manganate with a proper particle size.

According to the embodiments of the present disclosure, the zinc salt is selected from at least one of zinc acetate (Zn(CH₃OO)₂), zinc sulfate and zinc nitrate. Thus, zinc oxide can be obtained effectively in a subsequent high-temperature reaction. When zinc acetate is used, zinc acetate generates carbon dioxide, water and zinc oxide in the subsequent high-temperature reaction, wherein the zinc oxide is coated onto a surface of the nickel lithium manganate. When zinc sulfate is used, zinc sulfate generates zinc oxide and lithium sulfate (the residual alkali takes part in the reaction) in the high-temperature reaction, such that the coating layer zinc oxide will be doped with a small amount of lithium sulfate, and furthermore, the content of the residual alkali is further reduced favorably in the reaction. When zinc nitrate is used, zinc nitrate will generate zinc oxide, nitric oxide and/or nitrogen dioxide in the high-temperature reaction.

According to the embodiments of the present disclosure, the concentration of the zinc salt is 0.5-2 mol/L (for example, 0.5 mol/L, 0.8 mol/L, 1.0 mol/L, 1.2 mol/L, 1.5 mol/L, 1.8 mol/L and 2.0 mol/L), thereby obtaining zinc oxide with a needed content favorably. The volume of the zinc salt solution can be adjusted flexibly by those skilled in the art according to the content of needed zinc oxide in the cobalt-free lamellar cathode material and is not limited herein.

In addition, a solvent in the zinc salt solution is not required specially, and those skilled in the art can select the solvent flexibly according to an actual condition. The zinc salt is dissolved fully, for example, the solvent includes but not limited to water and ethanol and the like.

S200: the mixed solution is evaporated to dryness to obtain a pre-mixture.

The specific method of evaporation to dryness is not required specifically. As long as the solvent (the solvent of the zinc salt) in the mixed solution can be evaporated, and nickel lithium manganate and zinc salt cannot react. For example, the mixed solution can be stirred and evaporated to dryness at 100°C (the temperature can be adjusted according to the selected solvent).

S300: a reaction is conducted on the pre-mixture at a predetermined temperature for a predetermined time to obtain the cobalt-free lamellar cathode material.

According to the embodiments of the present disclosure, the predetermined temperature ranges from 400°C to 700°C (for example, 400°C, 450°C, 500°C, 550°C, 600°C, 650°C and 700°C) and the predetermined time ranges from 5 hours to 10 hours (for example, 5 hours, 6 hours, 7 hours, 8 hours, 9 hours and 10 hours). Thus, at the temperature, generation of zinc oxide can be guaranteed effectively. If the temperature is lower than 400°C, the temperature cannot reach the reaction temperature, which does not facilitate generation of zinc oxide; if the temperature is higher than 700°C, the generated zinc oxide is easily diffused into the nickel lithium manganate, such that the activity of the nickel lithium manganate is not affected and the nickel lithium manganate may be coated incompletely and non-uniformly, and therefore, the manganese ions are dissolved by the electrolyte in an increased manner.

According to the embodiments of the present disclosure, the reaction is conducted in an oxygen-containing environment, wherein a concentration of oxygen is 20-100%. Thus, in an oxygen environment, conversion of unstable Ni³⁺ in the nickel lithium manganate to stable Ni²⁺ can be inhibited and it is further favorable to generate zinc oxide. If the oxygen content is lower than 20%, it is easy to re-decompose the nickel lithium manganate, thereby being hard to generate a needed product.

According to the embodiments of the prevent disclosure, after obtaining the cobalt-free lamellar cathode material in the S300, the method further includes: screening the cobalt-free lamellar cathode material, wherein the screen is 300-400 meshes, hereby obtaining the cobalt-free lamellar cathode material with the proper particle size.

According to the embodiments of the present disclosure, in the method, manganese ions in nickel lithium manganate can be effectively prevented from being dissolved by an electrolyte of the lithium ion battery by coating the surface of the lamellar nickel lithium manganate of monocrystal morphology with zinc oxide, such that the specific capacity, the first time charge efficiency (first efficiency for short) and the cycle performance of the lithium ion battery can be further effectively improved. Moreover, the content of residual alkali (lithium hydroxide or lithium carbonate) of the prepared cobalt-free lamellar cathode material is lower. In addition, the method is simple and easy to operate, convenient for industrial production and low in production cost.

In yet another aspect of the present disclosure, the present disclosure provides a lithium ion battery. According to the embodiments of the present disclosure, the lithium ion battery includes the cobalt-free lamellar cathode material. Thus, the lithium ion battery has higher specific capacity and first effect and excellent cycle performance.

### Examples

### Example 1

The method for preparing the cobalt-free lamellar cathode material includes:
S1, LiOH and a precursor Ni_{0.75}Mn_{0.25}(OH)₂ are mixed by adopting the high speed mixing apparatus, wherein the mixing time is 10 min and the rotating speed is 800 rpm; a reaction is carried out on the mixed materials in an oxygen atmosphere (the concentration is greater than or equal to 90%), wherein the reaction temperature is 930°C, the reaction time is 10 hours, and after reaction, natural cooling is conducted and the mixture is sieved by the 400-mesh sieve to obtain the lamellar nickel lithium manganate of monocrystal morphology; and
S2, 100g of the nickel lithium manganate obtained in the S1 and 1.2 mL of zinc acetate aqueous solution with a concentration of 1 mol/L are mixed uniformly to obtain a mixed solution; then obtained mixed solution is stirred and evaporated to dryness at 100°C to obtain a pre-mixture; then a reaction is conducted on the pre-mixture for 5 hours at 500°C, wherein the concentration of oxygen in the reaction atmosphere is 95%, and after reaction, natural cooling is conducted and the mixture is sieved by the 400-mesh sieve to obtain the cobalt-free lamellar cathode material, wherein the mass percent of zinc oxide in the cobalt-free lamellar cathode material is 0.1% (the content of zinc ions in the cobalt-free lamellar cathode material can be measured by ICP, such that the content of zinc oxide is determined).

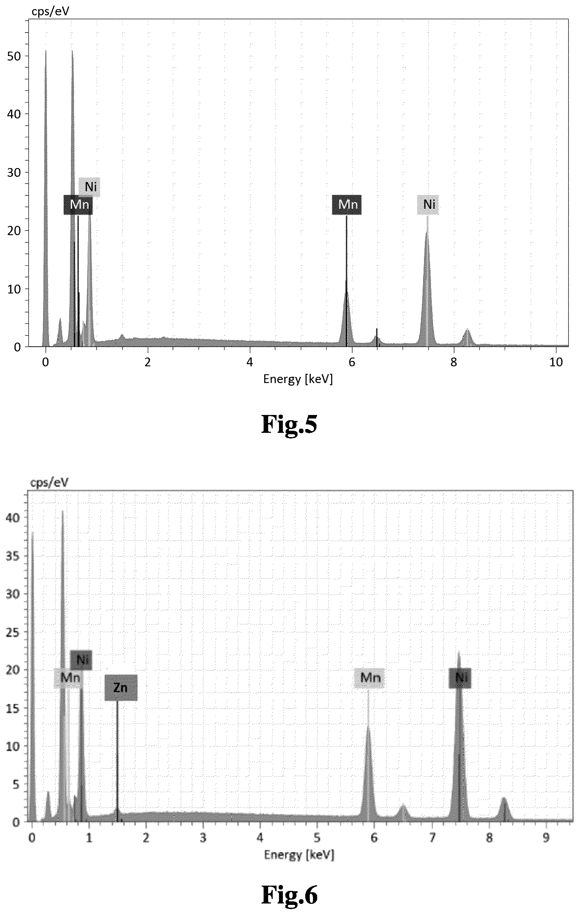

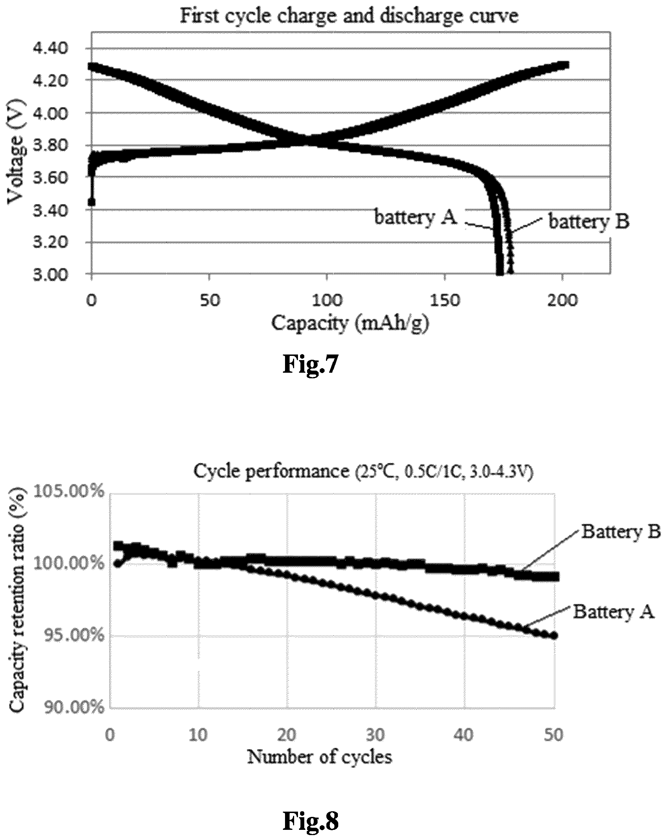

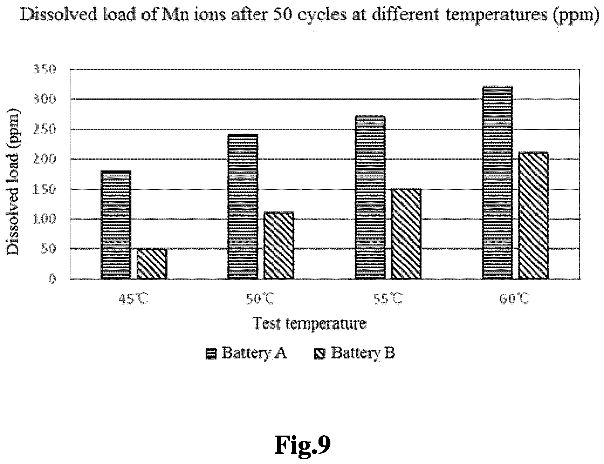

Result analysis:
(1) Electron microscope scanning is conducted on the obtained lamellar nickel lithium manganate of monocrystal morphology and the cobalt-free lamellar cathode material, and the scanning electron microscope pictures of the lamellar nickel lithium manganate and the cobalt-free lamellar cathode material refer to the Fig. 3 and Fig. 4. It can be seen from the Fig. 3 and Fig. 4 that compared with the nickel lithium manganate in the Fig. 3, the surface of the cobalt-free lamellar cathode material in the Fig. 4 is relatively coarse and is coated with a layer of substance. The change on particle size of the material is not great after and before being coated.
(2) Energy spectrum (EDS) pictures of the nickel lithium manganate and the cobalt-free lamellar cathode material refer to the Fig. 5 and Fig. 6 respectively. It can be seen from the EDS energy spectrum pictures that the substance on the surface of the cobalt-free lamellar cathode material contains an element zinc, and it can be seen that the substance coating the surface of the nickel lithium manganate is zinc oxide.
(3) The obtained lithium manganate and cobalt-free lamellar cathode material are uniformly, respectively, mixed with the conducting agent SP and the bonder PVDF in NMP at a proportion of 92: 4: 4 to obtain slurry. The slurry is coated uniformly to the aluminum foil and is then dried at 100°C to obtain a cathode piece. The cathode piece, an anode (a lithium piece), an electrolyte (the electrolyte includes LiPF₆ (lithium hexafluorophosphate)/EC (ethylene carbonate)-DMC (dimethyl carbonate), a diaphragm and the like are assembled to form the lithium ion battery A (a battery A for short) and the lithium ion battery B (a battery B for short) in a glove box filled with argon. The battery model is R2032, the diaphragm is a polypropylene microporous membrane (Celgard 2300), and besides the cathode material, other aspects of the batteries A and B are same. Charge and discharge performance of the lithium ion batteries A and B are tested respectively, and a charge and discharge performance test (the voltage range is 3.0-4.3 V) result refers to the Fig. 7 (first week charge and discharge curve). In combination with the Fig. 7, it can be seen that at 0.1C discharge rate, the first cycle specific charge and discharge capacities of the lithium ion battery A are 201.6 mAh/g and 173.6 mAh/g respectively, and the first time efficiency is 86.1%; and the first cycle specific charge and discharge capacities of the lithium ion battery B are 201.5 mAh/g and 178.2 mAh/g respectively, and the first time efficiency is 88.4%.
(4) the lithium ion batteries A and B in the (3) are cycled at 1C rate respectively, the cyclic curve is shown in the Fig. 8, and it can be known from the Fig. 8 that the battery capacity retention ratio of the lithium ion battery A after 50 cycles of circulation is 95%, and the battery capacity retention ratio of the lithium ion battery B after 50 cycles of circulation is 99%.
(5) The contents of manganese ions in the electrolyte of the lithium ion battery A and the lithium ion battery B after 50 cycles at different temperatures are compared, and the test result refers to the Fig. 9. It can be seen by the Fig. 9 that coated with the zinc oxide, the dissolved load of manganese ions in the cobalt-free lamellar cathode material in the electrolyte is reduced greatly.

### Example 2

100g of nickel lithium manganate obtained in the example 1 is uniformly mixed with 1.8 mL of zinc acetate aqueous solution with a concentration of 1 mol/L, and the mixture is dried and reacted under a condition same as the example 1 to obtain the cobalt-free lamellar cathode material, wherein the content of zinc oxide in the cobalt-free lamellar cathode material is 0.15%.

### Example 3

100g of nickel lithium manganate obtained in the example 1 is uniformly mixed with 2.4 mL of zinc acetate aqueous solution with a concentration of 1 mol/L, and the mixture is dried and reacted under a condition same as the example 1 to obtain the cobalt-free lamellar cathode material, wherein the content of zinc oxide in the cobalt-free lamellar cathode material is 0.20%.

### Example 4

100g of nickel lithium manganate obtained in the example 1 is uniformly mixed with 3.6 mL of zinc acetate aqueous solution with a concentration of 1mol/L, and the mixture is dried and reacted under a condition same as the example 1 to obtain the cobalt-free lamellar cathode material, wherein the content of zinc oxide in the cobalt-free lamellar cathode material is 0.3%.

### Example 5

100g of nickel lithium manganate obtained in the example 1 is uniformly mixed with 0.36 mL of zinc acetate aqueous solution with a concentration of 1mol/L, and the mixture is dried and reacted under a condition same as the example 1 to obtain the cobalt-free lamellar cathode material, wherein the content of zinc oxide in the cobalt-free lamellar cathode material is 0.03%.

### Example 6

100g of nickel lithium manganate obtained in the example 1 is uniformly mixed with 4.8 mL of zinc acetate aqueous solution with a concentration of 1mol/L, and the mixture is dried and reacted under a condition same as the example 1 to obtain the cobalt-free lamellar cathode material, wherein the content of zinc oxide in the cobalt-free lamellar cathode material is 0.4%.

### Example 7

100g of nickel lithium manganate obtained in the example 1 is uniformly mixed with zinc acetate aqueous solution with same volume concentration with the example 1, and the mixture is reacted for 5 hours at 400°C to obtain the cobalt-free lamellar cathode material, wherein the content of zinc oxide in the cobalt-free lamellar cathode material is 0.1%.

### Example 8

100g of nickel lithium manganate obtained in the example 1 is uniformly mixed with zinc acetate aqueous solution with same volume concentration with the example 1, and the mixture is reacted for 5 hours at 600°C to obtain the cobalt-free lamellar cathode material, wherein the content of zinc oxide in the cobalt-free lamellar cathode material is 0.1%.

### Example 9

100g of nickel lithium manganate obtained in the example 1 is uniformly mixed with zinc acetate aqueous solution with same volume concentration with the example 1, and the mixture is reacted at 700°C for 5 hours to obtain the cobalt-free lamellar cathode material, wherein the content of zinc oxide in the cobalt-free lamellar cathode material is 0.1%.

### Example 10

100g of nickel lithium manganate obtained in the example 1 is uniformly mixed with zinc acetate aqueous solution with same volume concentration with the example 1, and the mixture is reacted at 300°C for 5 hours to obtain the cobalt-free lamellar cathode material, wherein the content of zinc oxide in the cobalt-free lamellar cathode material is 0.04%.

### Example 11

100g of nickel lithium manganate obtained in the example 1 is uniformly mixed with zinc acetate aqueous solution with same volume concentration with the example 1, and the mixture is reacted at 800°C for 5 hours to obtain the cobalt-free lamellar cathode material, wherein the content of zinc oxide in the cobalt-free lamellar cathode material is 0.1%.

### Example 12

S1: LiOH and a precursor Ni_{0.55}Mn_{0.45}(OH)₂ are mixed by the high speed mixing apparatus, and other aspects are as same as the example 1, thereby obtaining the lamellar nickel lithium manganate LiNi_{0.55}Mn_{0.45}O₂ of monocrystal morphology; and
S2: same with the example 1.

### Example 13

S1: LiOH and a precursor Ni_{0.95}Mn_{0.05}(OH)₂ are mixed by the high speed mixing apparatus, and other aspects are as same as the example 1, thereby obtaining the lamellar nickel lithium manganate LiNi_{0.95}Mn_{0.05}O₂ of monocrystal morphology; and
S2: same with the example 1.

### Comparative example 1

S1: same with the example 1 and coating is not conducted.

### Comparative example 2

S1, LiOH and a precursor Ni_{0.45}Mn_{0.55}(OH)₂ are mixed by adopting the high speed mixing apparatus, wherein the mixing time is 10 min and the rotating speed is 700 rpm; a reaction is carried out on the mixed materials in an oxygen atmosphere (the concentration is 80%), wherein the reaction temperature is 1000°C, the reaction time is 24 hours, and after reaction, natural cooling is conducted and the mixture is sieved by the 400-mesh sieve to obtain the lamellar nickel lithium manganate of monocrystal morphology; and
S2, 100g of the nickel lithium manganate obtained in the S1 and 48 mL of zinc acetate aqueous solution with a concentration of 0.1 mol/L are mixed uniformly to obtain a mixed solution; then obtained mixed solution is stirred and evaporated to dryness at 100°C to obtain a pre-mixture; then a reaction is conducted on the pre-mixture for 15 hours at 300°C, wherein the concentration of oxygen in the reaction atmosphere is 15%, and after reaction, natural cooling is conducted and the mixture is sieved by the 400-mesh sieve to obtain the cobalt-free lamellar cathode material, wherein the mass percent of zinc oxide in the cobalt-free lamellar cathode material is 0.4% (the content of zinc ions in the cobalt-free lamellar cathode material can be measured by ICP, such that the content of zinc oxide is determined).

### Comparative example 3

S1: LiOH and a precursor Ni_{0.75}Mn_{0.15}Co_{0.10}(OH)₂ are mixed by the high speed mixing apparatus, and other aspects are as same as the example 1, thereby obtaining the lamellar nickel lithium manganate LiNi_{0.75}Mn_{0.15}Co_{0.10}O₂ of monocrystal morphology; and
S2: same with the example 1.

The cobalt-free lamellar cathode materials obtained in the examples 2-13 and the comparative examples 1-3 are combined to obtain the lithium ion batteries by adopting the methods and conditions same with the example 1, the first week specific charge and discharge capacities of the batteries are tested at 0.1C discharge rate, the cycle performance (cycles of 50 weeks) of the batteries are tested at 1C rate, and the contents of manganese ions in the electrolyte of the batteries are tested at 50°C (the test conditions are kept consistent with those in the example 1), and the test result refers to a table 1.

**Table 1**

| | | First cycle charge capacity (mAh/g) | Specific discharge capacity (mAh/g) | Cyclic capacity retention ratio (%) | Content of manganese ions in the electrolyte (ppm) |
|---|---|---|---|---|---|
| Example 1 | Battery A (comparative example 1) | 201.6 | 173.6 | 95% | 240 |
| | (comparative example 2) | 163.0 | 142.8 | 97.4% | 260 |
| | (comparative example 3) | 210.6 | 183.5 | 99.5% | 100 |
| | Battery B (Example 1) | 201.5 | 178.2 | 99% | 110 |
| Example 2 | | 203.4 | 177.9 | 98.6% | 105 |
| Example 3 | | 205.7 | 178.8 | 98.3% | 101 |
| Example 4 | | 202.3 | 176.3 | 98% | 95 |
| Example 5 | | 200.1 | 174.9 | 96% | 201 |
| Example 6 | | 198.3 | 171.5 | 99.5% | 88 |
| Example 7 | | 210.0 | 180.9 | 97.2% | 189 |
| Example 8 | | 208.8 | 178.1 | 99.4% | 197 |
| Example 9 | | 205.1 | 177.5 | 98.4% | 215 |
| Example 10 | | 200.6 | 176.6 | 96.8% | 223 |
| Example 11 | | 196.5 | 174.1 | 98.2% | 235 |
| Example 12 | | 174.8 | 154.9 | 99.8% | 128 |
| Example 13 | | 241.2 | 212.2 | 94.2% | 176 |

It can be known from the examples 1-6 that when the content of zinc oxide is within a range of 0.05-0.3%, the specific discharge capacity of the lithium ion battery is high, and the cyclic capacity retention ratio is relatively high, too. After 50 cycles, the content of the manganese ions dissolved in the electrolyte is relatively low, too. When the content of zinc oxide is low, the content of the manganese ions dissolved in the electrolyte is relatively high (the nickel lithium manganate is coated incompletely), such that the specific discharge capacity and the cyclic capacity retention ratio of the lithium ion battery are reduced. When the content of zinc oxide is high, the discharge specific capacity of the lithium ion battery will be reduced. As a lot of zinc oxide is coated to the surface of the nickel lithium manganate, the structural stability of the cobalt-free lamellar cathode material can be further improved, and dissolution of the manganese ions is reduced, and therefore, the cyclic capacity retention ratio of the battery can be relatively improved. By overall consideration of comprehensive performance of the lithium ion battery, the content of zinc oxide is defined within a range of 0.05-0.3%, such that the lithium ion battery has good comprehensive performance.

It can be known from the examples 1 and 7-11 that although the contents of zinc oxide in the cobalt-free lamellar cathode material are consistent (except the example 10), zinc oxide is gradually dispersed into the nickel lithium manganate from the surface of the nickel lithium manganate along with increase of the reaction temperature. The higher the temperature is, the higher the content of the zinc oxide dispersed into the nickel lithium manganate is and the lower the content of the zinc oxide distributed on the surface. Therefore, when the reaction temperature is lower than 400°C (for example, example 10), the content of generated zinc oxide is low, such that the surface of the nickel lithium manganate is coated incompletely, which leads to relatively high content of manganese dissolved in the electrolyte and thereby further reducing the specific discharge capacity and the cycle performance of the lithium ion battery. When the reaction temperature is higher than 700°C, (for example, example 11), much zinc oxide is diffused into the nickel lithium manganate, such that the dissolved load of the manganese ions I the electrolyte is relatively high, and therefore, the specific discharge capacity of the lithium ion battery is reduced. Thus, in considering good comprehensive performance of the lithium ion battery, the application defines the reaction temperature within a range of 400-700°C.

In the description of the present specification, the description with reference to the terms "an embodiment", "some embodiments", "example", "specific example", or "some examples" and the like means that specific features, structures, materials, or features described in connection with the embodiments or examples are included in at least one embodiment or example of the present disclosure. In the present specification, the schematic representation of the above terms does not necessarily mean the same embodiment or example. Furthermore, the particular features, structures, materials, or characteristics described may be combined in a suitable manner in any one or more embodiments or examples. In addition, various embodiments or examples described in the specification, as well as features of various embodiments or examples, may be combined and combined by those skilled in the art without contradicting each other.

Although embodiments of the disclosure have been shown and described above, it will be understood that the above embodiments are illustrative and are not to be construed as limiting the present disclosure. Changes, modifications, alterations and variations of the above-described embodiments may be made by those skilled in the art.

## Claims

1. A cobalt-free lamellar cathode material of a lithium ion battery, wherein comprising lamellar nickel lithium manganate of monocrystal morphology and zinc oxide coated onto a surface of the nickel lithium manganate, wherein a general formula of the nickel lithium manganate is LiNiₓMn₁₋ₓO₂, and 0.55≤x≤0.95.

2. The cobalt-free lamellar cathode material according to claim 1, wherein a mass percent of the zinc oxide is 0.05-0.3% based on a total mass of the cobalt-free lamellar cathode material.

3. The cobalt-free lamellar cathode material according to claim 1, wherein a particle size of the nickel lithium manganate is 1-5 microns.

4. The cobalt-free lamellar cathode material according to claim 1, wherein a specific surface area of the cobalt-free lamellar cathode material is 0.1-0.8 m²/g.

5. A method for preparing the cobalt-free lamellar cathode material according to any one of claims 1-4, wherein comprising the following steps:
mixing the lamellar nickel lithium manganate of monocrystal morphology with a zinc salt solution to obtain a mixed solution;
evaporating the mixed solution to dryness to obtain a pre-mixture; and
conducting a reaction on the pre-mixture at a predetermined temperature for a predetermined time to obtain the cobalt-free lamellar cathode material.

6. The method according to claim 5, wherein the zinc salt is selected from at least one of zinc acetate, zinc sulfate and zinc nitrate.

7. The method according to claim 5, wherein a concentration of the zinc salt is 0.5-2 mol/L.

8. The method according to claim 5, wherein the predetermined temperature ranges from 400-700°C and the predetermined time ranges from 5-10 hours.

9. The method according to claim 5, wherein the reaction is conducted on the pre-mixture in an oxygen-containing environment, wherein a concentration of oxygen is 20-100%.

10. A lithium ion battery, wherein comprising the cobalt-free lamellar cathode material according to any one of claims 1-4.
